# EUROPEAN PATENT SPECIFICATION

(11) **EP 2 389 307 B1**
(45) Date of publication and mention of the grant of the patent: **25.11.2015**
(21) Application number: 08879225.4
(22) Date of filing: 23.12.2008
(51) Int. Cl.: B62D 21/12, B62D 65/12

(54) **SUBFRAME WITH GUIDING MEANS AND VEHICLE COMPRISING SAID SUBFRAME**
UNTERRAHMEN MIT EINEM FÜHRUNGSMITTEL UND DEN UNTERRAHMEN UMFASSENDES FAHRZEUG
FAUX-CADRE POURVU DE MOYENS DE GUIDAGE ET VÉHICULE COMPRENANT LEDIT FAUX-CADRE

(43) Date of publication of application: 30.11.2011
(73) Proprietor: Volvo Lastvagnar AB, 405 08 Göteborg (SE)
(72) Inventor: NILSSON, Rickard, S-446 33 Älvängen (SE); LUNDMARK, Andreas, S-448 33 Floda (SE)
(74) Representative: Fröhling, Werner Otto
(86) International application number: PCT/SE2008/000744
(87) International publication number: WO 2010/074613

(56) References cited:
- EP-A1- 1 731 409
- EP-A2- 0 071 250
- WO-A1-02/26548
- WO-A1-02/099293
- DE-A1- 3 703 868
- US-A1- 2008 134 490
- US-A1- 2008 134 490
- US-B1- 6 398 261

## Description

### TECHNICAL FIELD

The invention relates to a vehicle chassis for a commercial vehicle and a vehicle comprising a vehicle chassis according to the preambles of the independent claims.

### BACKGROUND OF THE INVENTION

It is known in the art that vehicles, particularly trucks, can comprise subframes for individual wheel suspensions attached to the chassis frame.

US6874816 discloses a coupling configuration of a vehicle chassis frame with two different levels of a subframe which is pivotably attached to the longitudinal frame. The vehicle provides an individual wheel suspension. The subframe comprises a U-shaped cross member which is runs below the frame rails and is attached at the outside of each frame rail. A pattern of bores is provided to attach the cross member to the frame rails.

Document US-A-2008 0134490 corresponds to the preamble features of independent claim 1.

When the bearing or bores of the cylinders are to be inspected the oil pan below the engine has to be removed. On an individual wheel suspension it is not possible to remove the oil pan because of the chassis mounted components of the individual wheel suspension limit the free space and prevent lowering of the oil pan by a sufficient distance for removing the oil pan.

### SUMMARY OF THE INVENTION

It is an object of the invention to provide a vehicle chassis which allows to furnishing an individual wheel support to a vehicle maintaining sufficient access to aggregates for servicing. Another aspect of the invention is to provide a vehicle comprising such a vehicle chassis.

The objects are achieved by the features of the independent claim 1. The dependent claims and the description disclose advantageous embodiments of the invention.

A vehicle chassis for a commercial vehicle, particularly a truck, is proposed comprising longitudinal beams with a front end and a back end connected by at least one cross member between the front end and the back end, wherein the at least one cross member passes under an engine and/or a gearbox. The cross member is attachable to the longitudinal beams by a guiding member providing a guided lowering and rising of the cross member with respect to the longitudinal beams. Favourably, the cross member can be removed, thus giving way to first components attached fixedly to the chassis, such as the engine and/or the gear box for servicing. The at least one cross member comprises a sub frame carrying second components such as steering gear, damper devices, air springs and the like, particularly in conjunction with an individual wheel suspension arrangement, e.g. at the front wheel axle. The second components are at least attached to the cross member. One or more of the second components can be connected to the chassis frame as well, e.g. a damper device or air bellows of an air spring. By the guided movement provided by the guiding member, the second components can be moved away and moved towards the first components in a controlled way so that a readjustment of the locations of the second components can be avoided. In case of second components attached to the chassis frame as well as to the cross member, these can be flexibly extended when the cross member is lowered.

The invention is particularly advantageous for vehicles with individually suspended wheels (IFS), particularly at a front axle of the vehicle. The second components can be lowered together with the at least one cross member by a predetermined distance defined by the guiding member. The second components may for instance be arranged on a subframe comprising two cross members. Thus the complete sub frame of the individual wheel suspension can be lowered and raised without being detached from the chassis frame. The distance for lowering can be adjusted to the length of the guiding member and/or the extension capabilities of such second components attached to both the cross member and the frame rails, such as a damper device, an air bellows or the like. Typical numbers are e.g. several centimetres which is enough for giving way to removing the oil pan of the engine for inspecting cylinder linings and the like.

The lowering of the whole package including the subframe and the individual wheel suspension can be controlled by moving along the guiding member, favourably along a control surface of the guiding member. Other components in the surrounding of the cross member are not affected by lowering or raising the cross member. For instance the wheel alignment is not affected and complex readjustment can be avoided. Particularly, it is possible to provide an accurate upper stop of the cross member which is favourable for maintaining the adjustment of the steering gear and the air spring of the individual wheel suspension, for instance.

According to a favourable embodiment of the invention, the cross member can comprise a first leg and a second leg attachable on each of the longitudinal beams. Favourably, the cross member can be U-shaped with two legs attached to the frame rails on each side of the vehicle and a U-base running under the first components. Favourably, the at least one cross member passes under an area of the longitudinal beams provided for mounting an engine and/or a gearbox to the longitudinal beams.

According to a further favourable embodiment of the invention, the guiding member can provide a control surface for lowering and rising the cross member. The complementary part can be a follower member, e.g. a pin or a screw sliding along the control surface. Alternatively or additionally, a guiding member can be provided by one or both of the longitudinal beams. The control surface can be easily formed by one or more adequate bores in the guiding member. The bore can be oblong, can be tilted with respect to a vertical axis, can be bent and can be shaped in any desired form which is adequate for a controlled lowering and raising of the cross member. The guiding members can be arranged in a way that the control surfaces provide a controlled vertical movement of the cross member simultaneously with respect to both longitudinal beams. The guiding members can be arranged in a way that the control surfaces provide a controlled vertical movement of more than one cross member simultaneously with respect to both longitudinal beams. The guiding members can be arranged in a way that the control surfaces allow a pivotable movement of the cross member with lowering one leg on one longitudinal beam while the other leg or longitudinal beam provides a pivot axis. The guiding members can be arranged in a way that the control surfaces allow a pivotable movement of more than two cross members simultaneously with lowering legs on one longitudinal beam while a pivot axis is provided at legs of the cross members arranged at the opposite longitudinal beam or at the opposite longitudinal beam.

According to a further favourable embodiment of the invention, at least one of the longitudinal beams can provide guiding members for the first leg and/or the second leg of the at least one cross member. The guiding member can comprise control surface which can be easily formed by one or more adequate bores. The bore can be oblong, can be tilted with respect to a vertical axis, can be bent and can be shaped in any desired form which is adequate for a controlled lowering and raising of the cross member.

According to a further favourable embodiment of the invention, the guiding member can comprise guide rails. The guide rails can be easily fabricated in conjunction with the first and second leg.

According to a further favourable embodiment of the invention, the first leg can comprise one or more bores for fixing the cross member to the longitudinal beams. The cross member can be attached to the longitudinal beams at an accurate position which is favourable for maintaining the adjustment of second components on the cross member. After lowering and raising the cross member complex adjustment of e.g. the steering gear can be avoided.

According to a further favourable embodiment of the invention, the guiding member can be formed as an oblong bore for guiding the cross member relative to the longitudinal beams. Favourable, this allows a simultaneous vertical movement of the cross member on both of the longitudinal beams.

According to a further favourable embodiment of the invention, the guiding member can provide a curved control surface for tilting the cross member relative to the longitudinal beams. Favourably, the cross member can be pivotably moved, e.g. for adjusting an air bellows on the cross member.

According to a further favourable embodiment of the invention, two or more guiding members providing a curved control surface can be arranged on legs of cross members attachable to the same longitudinal beam. It is possible to provide a one-sided movement of the cross members.

According to a further favourable embodiment of the invention, the guiding member providing a curved control surface can be arranged on either the first leg or the second leg attachable to the both longitudinal beams. This allows a one sided tilting of the cross member.

According to a further favourable embodiment of the invention, the guiding member can provide a conical shape for self positioning of the cross member in case of rising the cross member relative to the longitudinal beams. Favourably, a misalignment of the cross member can be compensated.

According to a further favourable embodiment of the invention, the guiding member can provide a snap-in function for fixing the cross member in case of rising the cross member relative to the longitudinal beams. An accurate end position can be achieved and attachment of the cross member to the longitudinal beams is eased. With the cross member held in the upper position by the snap-in function it fixing the cross member through bores to the longitudinal beams is more comfortable.

According to a further favourable embodiment of the invention, the guiding member can provide a defined end stop for rising the cross member. Due to the accurate end position damper devices and steering gear mounted as second components to the cross member need not to be readjusted after lowering and rising the cross member.

According to a further favourable embodiment of the invention, the cross member can carry at least one of one or more steering gears, one or more stabilizer devices, one or more air springs, one or more damper devices. A compact component package can be achieved. It is possible to preassembly the component package which safes time during vehicle assembly.

According to another aspect of the invention, a vehicle is proposed, particularly commercial vehicle, more particularly a truck, comprising a vehicle chassis with longitudinal beams with a front end and a back end connected by at least one cross members between the front end and the back end, wherein the cross members pass under an engine and/or a gear box mounted to the vehicle chassis. The chassis frame is particularly embodied with at least one of the features described above. Favourably, a vehicle with individual wheel suspension can be provided with a good serviceability.

### BRIEF DESCRIPTION OF THE DRAWINGS

The present invention together with the above-mentioned and other objects and advantages may best be understood from the following detailed description of the embodiments, but not restricted to the embodiments, wherein is shown schematically:
- Fig. 1: a perspective view on a front portion of a chassis frame with individual wheel suspension comprising two cross members according to the invention;
- Fig. 2: a detail of a cross member of Fig. 1;
- Fig. 3a-3c: various guiding members displaying different control surfaces; and
- Fig. 4: a preferred vehicle comprising cross members according to the invention.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

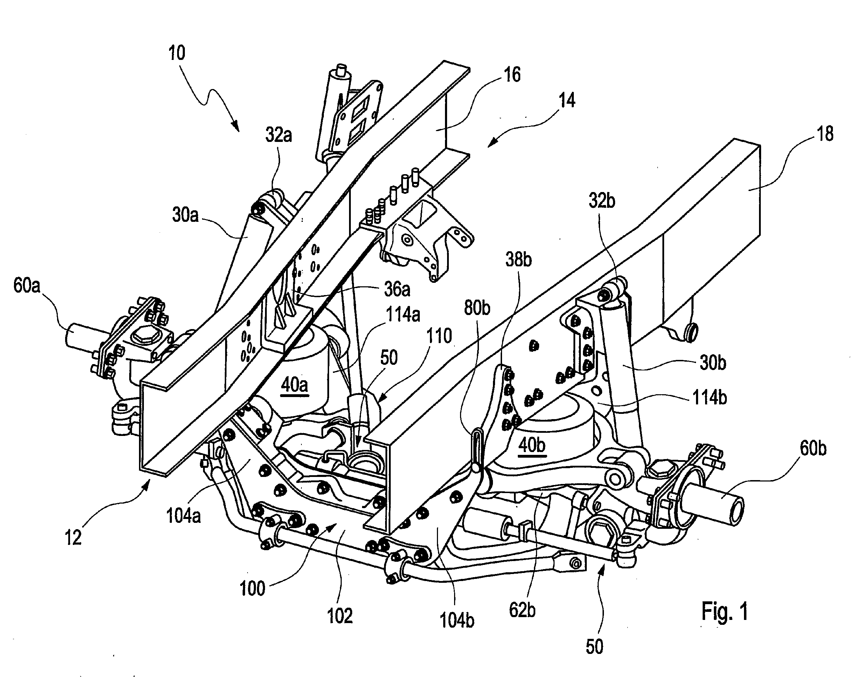

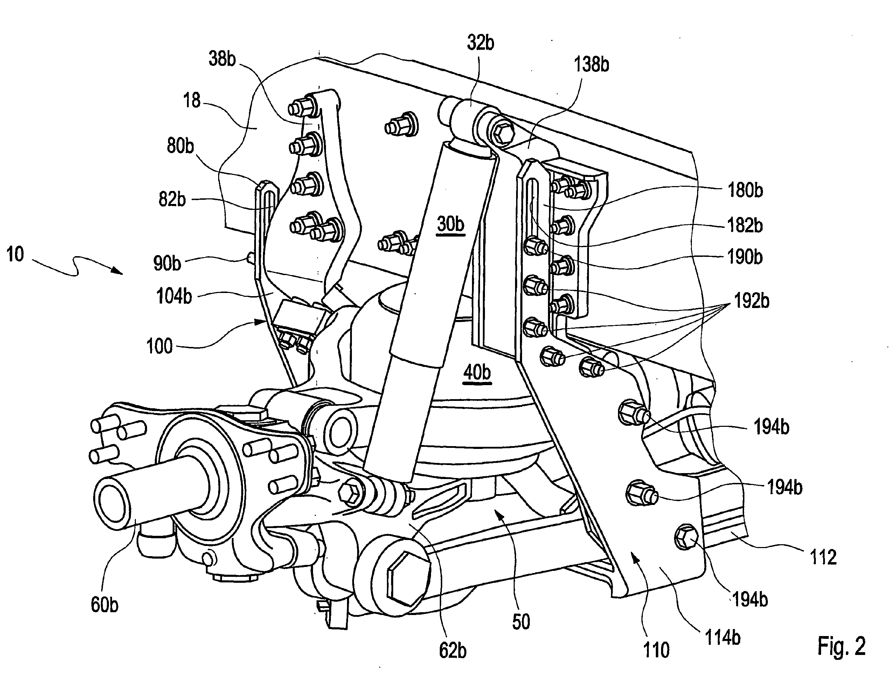

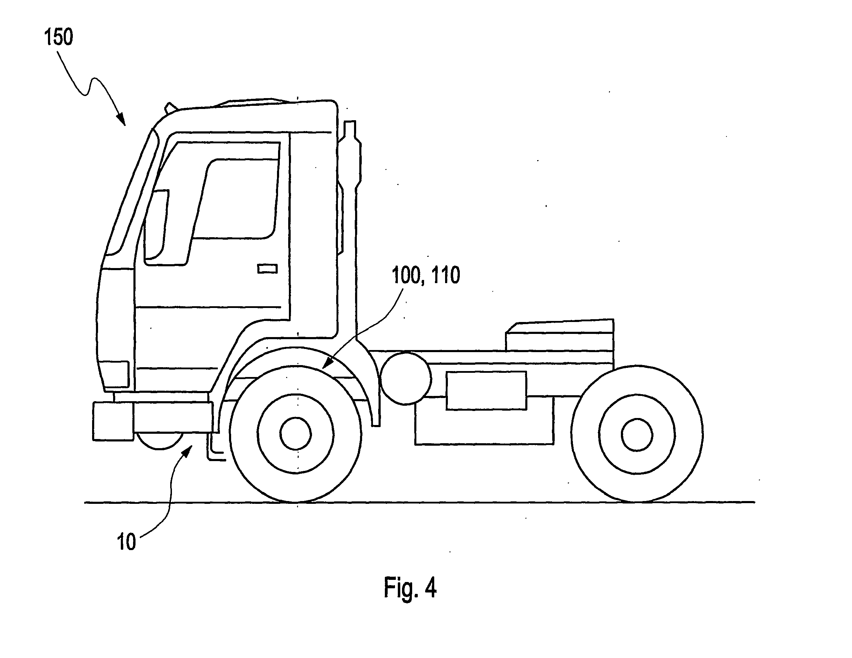

Fig. 1 in conjunction with Fig. 2 depict different perspective views of a front part of an example embodiment of a vehicle chassis 10 for a commercial vehicle 150 (Fig. 4), particularly a truck, comprising longitudinal beams 16, 18 with a front end 12 and a back end 14. Fig. 1 shows a perspective view from the front side, Fig. 2 shows a perspective view from the rear side of the front part.

The longitudinal beams 16, 18 are connected by a first cross member 100 and a second cross member 110 between the front end 12 and the back end 14. The cross members 100, 110 pass under first components mounted to the longitudinal beams 16, 18 of the chassis frame 10, particularly an engine and/or a gearbox (not shown).

The cross members 100, 110 carry second components of an individual wheel suspension mounted solely to the cross members 100, 110 such as e.g. wheel carriers 60a, 60b, components of a steering gear 50 or connected to the longitudinal beams 16, 18 and the cross members 100, 110 such as particularly damper devices 30a, 30b and air bellows 40a, 40b. For instance, the damper device 30b is attached to the longitudinal beam 18 with its head 32b and with its bottom it is attached to the wheel carrier 60b. Likewise, the air bellows 40b is attached with its top to the underside of the longitudinal beam 18 and with its bottom to the wheel carrier component 62b.

The cross member 100 has a U-shaped with a base portion 102 between a left leg 104a and a right leg 104b. The cross member 110 has likewise a U-shaped form with a base portion 112 between a left leg 114a and a right leg 114b. The legs 104a, 104b are connected to the outside of the longitudinal beams 16, 18 as well as the legs 114a, 114b

The cross member 100 is attached to the longitudinal beams 16, 18 by a guiding member 80a (not directly to be seen in the perspective view) and 80b providing a guided lowering and rising of the cross member 100 with respect to the longitudinal beams 16, 18. The cross member 110 is attached to the longitudinal beams 16,18 by a corresponding guiding members (not to be seen in the perspective view) providing a guided lowering and rising of the cross member 100 with respect to the longitudinal beams 16, 18.

The guiding members (only 80b to be seen for cross member 100 in Fig. 1 and Fig. 2) are integrated in the left and right legs 104a, 104b of the cross member 100 and embodied as guide rails such as oblong bores which provide a control surface 82b and 182b, respectively. Likewise, guiding members (only 180b to be seen in Fig. 2) are integrated in the left and right legs114a, 114b of the cross members 110.

A follower, e.g. a pin or screw 90b connected to the longitudinal beam 18 protrudes from the oblong hole forming the guiding member 80b. The pin 90b can be mounted on a bracket 38b attached to the longitudinal beam 18. A follower, e.g. a pin or screw 190b connected to the longitudinal beam 18, protrudes from the oblong hole forming the guiding member 180b. The pin 190b can be mounted on a bracket 138b attached to the longitudinal beam 18. The follower can slide along the oblong hole forming the guiding member 80b, 180b.

Some second components are preferably rigidly mounted with screws and bolts 194b to the cross members 100,110. The legs 104b, 114b (as well as the other legs 104a, 114a) are fixed to the longitudinal beams 16, 18 by respective attachment devices 92b, 192b such as screws and nuts. When in the upper position, the cross members 100, 110 thus are in an accurate and reproducible top position.

When these attachment devices 92b, 192b are removed, the cross members 100, 110 can slide down in a controlled way along the control surfaces provided in the guiding members 80b, 180b when the nuts are unscrewed from the screws 90b, 190b. The cross members 100, 110 can be lowered by a distance determined by the length of the oblong holes as well as the elasticity of the air bellows 40a, 40b and the damper devices 30a, 30b. Whereas it is not necessary to have an accurate lower position of the cross members 100, 110, the top position of the cross members 100, 110 is preferably very accurate because of the necessarily adjusted mounting of the steering gear 50.

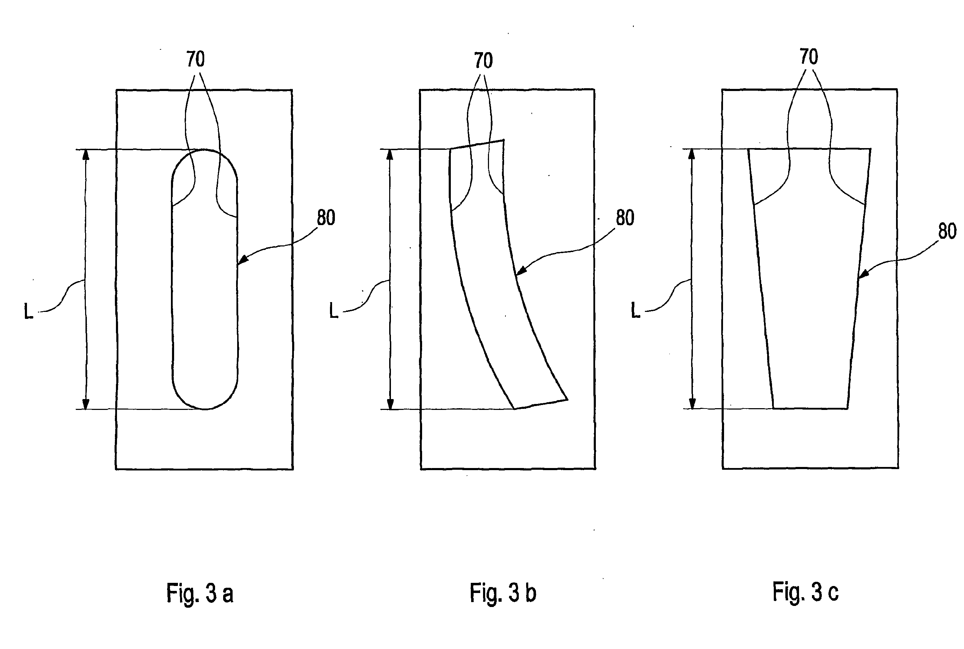

Fig. 3a-Fig. 3b depict various guiding members 80 embodied as simple guiding rails with control surfaces 70 for a pin or a screw projecting into the guiding members 80. The guiding members 80 can be arranged in the cross members 100, 110 as illustrated in Fig. 1 and Fig. 2 or in the longitudinal beams 16, 18. It is also possible to have guiding members 80 in the cross members and in the longitudinal beams 16, 18 if desired.

As depicted in Fig. 3a, the guiding member 80 can be formed as an oblong hole for guiding the cross member 100, 110 vertically relative to the longitudinal beams 16, 18 (Fig. 1, Fig. 2). A tilted movement is provided by a curved guiding member 80 in Fig. 3b. A self positioning is possible with a cone-shaped guiding member as shown in Fig. 3c.

Fig. 4 depicts a preferred vehicle 150, particularly commercial vehicle, particularly a truck, comprising a vehicle chassis 10 with longitudinal beams providing cross members 100, 110 (Fig. 1, Fig. 2) the longitudinal beams 16, 18, wherein the cross members 100, 110 pass under an engine and/or a gear box mounted to the vehicle chassis 10. The cross members 100, 110 can be used in conjunction with an individual front wheel suspension, for instance.

## Claims

1. A vehicle chassis (10) for a commercial vehicle (150), particularly a truck, comprising longitudinal beams (16, 18) with a front end (12) and a back end (14) connected by at least one cross member (100, 110) between the front end (12) and the back end (14), wherein the at least one cross member passes under an engine or a gear box, wherein the at least one cross member (100, 110) comprises subframe carrying second components which are attached to the at least one cross member (100, 110) and the longitudinal beams, **characterized in that** the cross member (100, 110) is attachable to the longitudinal beams (16, 18) by a guiding member (80b, 180b) providing a guided lowering and rising of the cross member (100, 110) with respect to the longitudinal beams (16, 18) and that a length of the guiding member (80b, 180b) defines a predetermined distance for lowering the at least one cross member (100,110).

2. The vehicle chassis according to claim 1 **characterized in that** at least one cross member (100, 110) provides the guiding member (80b, 180b).

3. The vehicle chassis according to any preceding claim, **characterized in that** at least one of the longitudinal beams (16, 18) provides the guiding member (80b, 180b).

4. The vehicle chassis according to any preceding claim, **characterized in that** the guiding member (80b, 180b) comprises a control surface (82b, 182b) for lowering and rising the cross member (100, 110).

5. The vehicle chassis according to any preceding claim, **characterized in that** the cross member (100, 110) comprises a first leg (104a, 114a) and a second leg (104b, 114b) attachable to each of the longitudinal beams (16, 18) wherein the first leg (104a, 114a) and the second leg (104b, 114b) are connected by a base member (102, 112).

6. The vehicle chassis according to claim 5, **characterized in that** the first leg (104a, 114a) and/or the second leg (104b, 114b) provide the guiding member (80b, 180b) control surface (82b, 182b) for lowering and rising the cross member (100, 110).

7. The vehicle chassis according to one of the claims 5 to 6, **characterized in that** the first leg (104a, 114a) and the second leg (104b, 114b) comprise guide rails as guiding members (80b, 180b).

8. The vehicle chassis according to one of the claims 5 to 7, **characterized in that** the first leg (104a, 114a) comprise one or more bores (92b, 192b) below each guiding member (80b, 180b) for fixing the cross member (100, 110) to the longitudinal beams (16, 18).

9. The vehicle chassis according to any preceding claim, **characterized in that** the guiding member (80b, 180b) is formed as an oblong bore for guiding the cross member (100, 110) relative to the longitudinal beams (16, 18).

10. The vehicle chassis according to any preceding claim, **characterized in that** the guiding member (80b, 180b) provides a curved surface for tilting the cross member (100, 110) relative to the longitudinal beams (16, 18).

11. The vehicle chassis according to claim 10, **characterized in that** the guiding member (80b, 180b) providing a curved control surface is arranged on the first leg (104a, 114a) or the second leg (104b, 114b).

12. The vehicle chassis according to any preceding claim, **characterized in that** the guiding member (80b, 180b) provides a conical shape for self positioning of the cross member (100, 110) in case of rising the cross member (100, 110) relative to the longitudinal beams (16, 18)or **in that** the guiding member (80b, 180b) provides a snap-in function for fixing the cross member (100, 110) in case of rising the cross member (100, 110) relative to the longitudinal beams (16, 18).

13. The vehicle chassis according to any preceding claim, **characterized in that** the guiding member (80b, 180b) provides a defined end stop (96) for rising the cross member (100, 110) or **in that** the cross member (100, 110) carries at least one of one or more steering gears (50), one or more stabilizer devices, one or more air springs (40a, 40b), one or more damper devices (30a, 30b).

14. A vehicle (150), particularly commercial vehicle, particularly a truck, comprising a vehicle chassis (10) with longitudinal beams (16, 18) with a front end (12) and a back end (14) connected by at least one cross members (100, 110) between the front end (12) and the back end (14) according to any preceding claim, wherein the cross members (100, 110) pass under an area of the longitudinal beams (16, 18) provided for mounting an engine and/or a gearbox to the longitudinal beams (16, 18).

## Patentansprüche

1. Fahrzeugchassis (10) für ein Nutzfahrzeug (150), insbesondere einen Lastwagen, das Längsträger (16, 18) mit einem vorderen Ende (12) und einem hinteren Ende (14) aufweist, die durch wenigstens ein Querelement (100, 110) zwischen dem vorderen Ende (12) und dem hinteren Ende (14) verbunden sind, wobei das wenigstens eine Querelement unter einem Motor oder einem Getriebe vorbeigeht, wobei das wenigstens eine Querelement (100, 110) einen Nebenrahmen umfasst, der zweite Komponenten trägt, die an dem wenigstens einen Querelement (100, 110) und den Längsträgern angebracht sind, **dadurch gekennzeichnet, dass** das Querelement (100, 110) an den Längsträgern (16, 18) durch ein Führungselement (80b, 180b) anbringbar ist, das ein geführtes Absenken und Anheben des Querelements (100, 110) bezüglich der Längsträger (16, 18) bereitstellt, und dass eine Länge des Führungselements (80b, 180b) einen vorherbestimmten Abstand zum Absenken des wenigstens einen Querelements (100, 110) definiert.

2. Fahrzeugchassis nach Anspruch 1, **dadurch gekennzeichnet, dass** das wenigstens eine Querelement (100, 110) das Führungselement (80b, 180b) bereitstellt.

3. Fahrzeugchassis nach irgendeinem vorhergehenden Anspruch, **dadurch gekennzeichnet, dass** wenigstens einer der Längsträger (16, 18) das Führungselement (80b, 180b) bereitstellt.

4. Fahrzeugchassis nach irgendeinem vorhergehenden Anspruch, **dadurch gekennzeichnet, dass** das Führungselement (80b, 180b) eine Steuerfläche (82b, 182b) zum Absenken und Anheben des Querelements (100, 110) umfasst.

5. Fahrzeugchassis nach irgendeinem vorhergehenden Anspruch, **dadurch gekennzeichnet, dass** das Querelement (100, 110) einen ersten Schenkel (104a, 114a) und einen zweiten Schenkel (104b, 114b) umfasst, die an jedem der Längsträger (16, 18) anbringbar sind, wobei der erste Schenkel (104a, 114a) und der zweite Schenkel (104b, 114b) durch ein Basiselement (102, 112) verbunden sind.

6. Fahrzeugchassis nach Anspruch 5, **dadurch gekennzeichnet, dass** der erste Schenkel (104a, 114a) und/oder der zweite Schenkel (104b, 114b) die Steuerfläche (82b, 182b) des Führungselements (80b, 180b) zum Absenken und Anheben des Querelements (100, 110) bereitstellen.

7. Fahrzeugchassis nach einem der Ansprüche 5 bis 6, **dadurch gekennzeichnet, dass** der erste Schenkel (104a, 114a) und der zweite Schenkel (104b, 114b) Führungsschienen als Führungselemente (80b, 180b) umfassen.

8. Fahrzeugchassis nach einem der Ansprüche 5 bis 7, **dadurch gekennzeichnet, dass** der erste Schenkel (104a, 114a) eine oder mehrere Bohrungen (92b, 192b) unterhalb jedes Führungselements (80b, 180b) zur Befestigung des Querelements (100, 110) an den Längsträgern (16, 18) umfasst.

9. Fahrzeugchassis nach irgendeinem vorhergehenden Anspruch, **dadurch gekennzeichnet, dass** das Führungselement (80b, 180b) als Längsbohrung zur Führung des Querelements (100, 110) bezüglich der Längsträger (16, 18) ausgebildet ist.

10. Fahrzeugchassis nach irgendeinem vorhergehenden Anspruch, **dadurch gekennzeichnet, dass** das Führungselement (80b, 180b) eine gekrümmte Fläche zur Neigung des Querelements (100, 110) bezüglich der Längsträger (16, 18) bereitstellt.

11. Fahrzeugchassis nach Anspruch 10, **dadurch gekennzeichnet, dass** das eine gekrümmte Steuerfläche bereitstellende Führungselement (80b, 180b) an dem ersten Schenkel (104a, 114a) oder dem zweiten Schenkel (104b, 114b) angeordnet ist.

12. Fahrzeugchassis nach irgendeinem vorhergehenden Anspruch, **dadurch gekennzeichnet, dass** das Führungselement (80b, 180b) eine konische Form zur Selbstpositionierung des Querelements (100, 110) bereitstellt, falls das Querelement (100, 110) bezüglich der Längsträger (16, 18) angehoben wird, oder dass das Führungselement (80b, 180b) eine Einschnappfunktion zur Befestigung der Querelemente (100, 110) bereitstellt, falls das Querelement (100, 110) bezüglich der Längsträger (16, 18) angehoben wird.

13. Fahrzeugchassis nach irgendeinem vorhergehenden Anspruch, **dadurch gekennzeichnet, dass** das Führungselement (80b, 180b) einen definierten Endstopp (96) zum Anheben des Querelements (100, 110) bereitstellt oder dass das Querelement (100, 110) wenigstens eines trägt von einem oder mehreren Lenkzahnrädern (50), von einer oder mehreren Stabilisiervorrichtungen, von einer oder mehreren Luftfedern (40a, 40b), von einer oder mehreren Dämpfervorrichtungen (30a, 30b).

14. Fahrzeug (150), insbesondere Nutzfahrzeug, insbesondere Lastwagen, mit einem Fahrzeugchassis (10) mit Längsträgern (16, 18) mit einem vorderen Ende (12) und einem hinteren Ende (14), die durch wenigstens ein Querelement (100, 110) zwischen dem vorderen Ende (12) und dem hinteren Ende (14) verbunden sind, nach einem der vorhergehenden Ansprüche, wobei die Querelemente (100, 110) unter einem Bereich der Längsträger (16, 18) vorbeigehen, der zur Befestigung eines Motors und/oder eines Getriebes an den Längsträgern (16, 18) vorgesehen ist.

## Revendications

1. Châssis de véhicule (10) pour un véhicule utilitaire (150), en particulier un camion, comprenant des longerons (16, 18) avec une extrémité avant (12) et une extrémité arrière (14) reliées par au moins une traverse (100, 110) entre l'extrémité avant (12) et l'extrémité arrière (14), où l'au moins une traverse passe sous un moteur ou une boîte de vitesses, où l'au moins une traverse (100, 110) comprend un faux cadre portant des deuxièmes composants qui sont fixés à l'au moins une traverse (100, 110) et aux longerons, **caractérisé en ce que** la traverse (100, 110) peut être fixée aux longerons (16, 18) par un élément de guidage (80b, 180b) fournissant un abaissement et une élévation guidés de la traverse (100, 110) par rapport aux longerons (16, 18) et **en ce qu'**une longueur de l'élément de guidage (80b, 180b) définit une distance prédéterminée pour abaisser l'au moins une traverse (100, 110).

2. Châssis de véhicule selon la revendication 1, **caractérisé en ce qu'**au moins une traverse (100 110) fournit l'élément de guidage (80b, 180b).

3. Châssis de véhicule selon l'une des revendications précédentes, **caractérisé en ce qu'**au moins l'un des longerons (16, 18) fournit l'élément de guidage (80b, 180b).

4. Châssis de véhicule selon l'une des revendications précédentes, **caractérisé en ce que** l'élément de guidage (80b, 180b) comprend une surface de commande (82b, 182b) pour abaisser et élever la traverse (100, 110).

5. Châssis de véhicule selon l'une des revendications précédentes, **caractérisé en ce que** la traverse (100, 110) comprend une première jambe (104a, 114a) et une deuxième jambe (104b, 114b) pouvant être fixées à chacun des longerons (16, 18) où la première jambe (104a, 114a) et la deuxième jambe (104b, 114b) sont reliées par un élément de base (102, 112).

6. Châssis de véhicule selon la revendication 5, **caractérisé en ce que** la première jambe (104a, 114a) et/ou la deuxième jambe (104b, 114b) fournit/fournissent la surface de commande (82b, 182b) de l'élément de guidage (80b, 180b) pour abaisser et élever la traverse (100, 110).

7. Châssis de véhicule selon l'une des revendications 5 à 6, **caractérisé en ce que** la première jambe (104a, 114a) et la deuxième jambe (104b, 114b) comprennent des rails de guidage en tant qu'éléments de guidage (80b, 180b).

8. Châssis de véhicule selon l'une des revendications 5 à 7, **caractérisé en ce que** la première jambe (104a, 114a) comprend un ou plusieurs alésage(s) (92b, 192b) en dessous de chaque élément de guidage (80b, 180b) pour fixer la traverse (100, 110) sur les longerons (16, 18).

9. Châssis de véhicule selon l'une des revendications précédentes, **caractérisé en ce que** l'élément de guidage (80b, 180b) est formé en tant qu'alésage oblong pour guider la traverse (100, 110) par rapport aux longerons (16, 18).

10. Châssis de véhicule selon l'une des revendications précédentes, **caractérisé en ce que** l'élément de guidage (80b, 180b) fournit une surface courbe pour incliner la traverse (100, 110) par rapport aux longerons (16, 18).

11. Châssis de véhicule selon la revendication 10, **caractérisé en ce que** l'élément de guidage (80b, 180b) fournissant une surface de commande coubée est agencé sur la première jambe (104a, 114a) ou la deuxième jambe (104b, 114b).

12. Châssis de véhicule selon l'une des revendications précédentes, **caractérisé en ce que** l'élément de guidage (80b, 180b) fournit une forme conique pour l'auto-positionnement de la traverse (100 110) en cas d'élévation de la traverse (100, 110) par rapport aux longerons (16, 18) ou **en ce que** l'élément de guidage (80b, 180b) fournit une fonction d'encliquetage pour la fixation de la traverse (100, 110) en cas d'élévation de la traverse (100, 110) par rapport aux longerons (16, 18).

13. Châssis de véhicule selon l'une des revendications précédentes, **caractérisé en ce que** l'élément de guidage (80b, 180b) fournit une butée d'extrémité définie (96) pour élever la traverse (100, 110) ou **en ce que** la traverse (100, 110) porte au moins l'un d'un ou de plusieurs boîtier(s) de direction (50), d'un ou de plusieurs dispositif(s) de stabilisation, d'un ou de plusieurs ressort(s) pneumatique(s) (40a, 40b), d'un ou de plusieurs dispositif(s) d'amortissement (30a, 30b).

14. Véhicule (150), en particulier véhicule utilitaire, en particulier un camion, comprenant un châssis de véhicule (10) avec des longerons (16, 18) avec une extrémité avant (12) et une extrémité arrière (14) reliées par au moins une traverse (100, 110) entre l'extrémité avant (12) et l'extrémité arrière (14) selon l'une des revendications précédentes, où les traverses (100, 110) passent sous une zone des longerons (16, 18) prévus pour le montage d'un moteur et/ou d'une boîte de vitesses sur les longerons (16, 18).
